(19) **Europäisches Patentamt**

**European Patent Office**

**Office européen des brevets**

(11) **EP 0 838 516 B1**

(12) **FASCICULE DE BREVET EUROPEEN**

(45) Date de publication et mention
de la délivrance du brevet:
**10.04.2002 Bulletin 2002/15**

(51) Int Cl.$^7$: **C10G 47/16**, C10G 47/20,
B01J 29/06

(21) Numéro de dépôt: **97402445.7**

(22) Date de dépôt: **16.10.1997**

(54) **Procédé d'hydrocraquage doux de coupes pétrolières avec un catalyseur contenant au moins deux zeolithes y desaluminées**

Mildes hydrokracken von Erdölfraktionen unter Verwendung eines zwei dealuminierte Y-Zeolithen enthaltende Katalysators

Mild hydrocracking of oil fractions with a catalyst containing two dealuminated Y-zeolites

(84) Etats contractants désignés:
**DE ES GB IT NL**

(30) Priorité: **22.10.1996 FR 9612958**

(43) Date de publication de la demande:
**29.04.1998 Bulletin 1998/18**

(73) Titulaire: **INSTITUT FRANCAIS DU PETROLE**
**92852 Rueil-Malmaison Cedex (FR)**

(72) Inventeurs:
• **Mignard, Samuel**
 **78400 Chatou (FR)**
• **Benazzi, Eric**
 **78400 Chatou (FR)**
• **George-Marchal, Nathalie**
 **75005 Paris (FR)**
• **Kasztelan, Slavik**
 **92500 Rueil Malmaison (FR)**

(56) Documents cités:
EP-A- 0 287 718    FR-A- 2 119 636
FR-A- 2 348 265    US-A- 4 477 336
US-A- 4 925 546

Remarques:
Le dossier contient des informations techniques présentées postérieurement au dépôt de la demande et ne figurant pas dans le présent fascicule.

**Description**

La présente invention concerne un procédé pour l'hydroconversion douce de coupes pétrolières avec un catalyseur comprenant au moins deux zéolithes Y désaluminées associées à une matrice habituellement amorphe ou mal cristallisée.

L'hydrocraquage doux de coupes pétrolières lourdes est un procédé de raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Par rapport au craquage catalytique, l'intérêt de l'hydrocraquage catalytique est de fournir des distillats moyens, carburéacteurs et gazoles, de qualité améliorée. En revanche, l'essence produite présente un indice d'octane beaucoup plus faible que celle issue du craquage catalytique.

Les catalyseurs utilisés en hydrocraquage doux sont du type bifonctionnels associant une fonction acide à une fonction hydrogénante. La fonction acide est apportée par des supports de grandes surfaces présentant une acidité superficielle assez faible, telles que les alumines halogénées (chlorées ou fluorées notamment), les combinaisons d'oxydes de bore et d'aluminium, les silices-alumines amorphes. Cette acidité usuellement utilisée est très inférieure à celle des zéolithes. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI de la classification périodique tels que chrome, molybdène et tungstène et au moins un métal du groupe VIII de préférence non noble.

Les catalyseurs conventionnels de l'hydrocraquage doux sont, pour leur grande majorité, constitués de supports faiblement acides, tels les silice-alumines amorphes par exemple. Dans les supports peu acides, on trouve la famille des silice-alumines amorphes.

Beaucoup de catalyseurs du marché de l'hydrocraquage doux sont constitués de silice-alumine associée, soit à un métal du groupe VIII soit, de préférence quand les teneurs en poisons hétéroatomiques de la charge à traiter dépassent 0,5 % en poids, à une association de sulfures des métaux des groupes VIB et VIII. Ces systèmes ont une très bonne sélectivité en distillats moyens, et les produits formés sont de qualité assez bonne. L'inconvénient de tous ces systèmes catalytiques à base de support amorphe est, comme on l'a dit, leur faible activité.

La présente invention permet d'éviter ces inconvénients. Elle a pour objet un procédé d'hydrocraquage doux avec un catalyseur comprenant au moins une matrice, au moins une zéolithe Y dite Y1 de paramètre cristallin compris entre 24.15Å et 24.38Å (1nm=10Å) et au moins une zéolithe Y dite Y2 de paramètre cristallin supérieur à 24.38Å et inférieur ou égal à 24.51 Å, et au moins un élément hydro-déshydrogénant.

Dans la suite du texte, les unités de paramètre cristallin seront exprimées en Å (1nm=10Å).

On connaît déjà le brevet EP-A-287.718 qui décrit un catalyseur d'hydrocraquage contenant 2 zéolites Y de paramètres cristallins différant d'au moins 0,1 Å et tous deux compris entre 24,20 et 24,35 Å Un tel catalyseur utilisable entre 0-20685 kPa et plus particulièrement entre 1379 et 20685 kPa, voit son activité augmentée par rapport aux zéolites de départ, sa sélectivité en distillats moyens se situant entre celle des zéolites de départ.

On connaît également un brevet US-4,925,546 décrivant un catalyseur à base d'un mélange d'une zéolite Y de paramètre cristallin 21,343-24,524 Å et d'une autre zéolite Y de paramètre 24,524-24,667 Å. Ce catalyseur permet d'obtenir une activité améliorée par rapport aux zéolites de départ, et surtout une sélectivité en naphta plus élevée.

Le catalyseur et le suppport de la présente invention renferment donc au moins deux zéolithes Y de structure faujasite (Zéolite Molecular Sieves Structure, chemistry and uses, D.W. BRECK, J. WILLEY and Sons 1973) qui peuvent être soit sous forme hydrogène soit être au moins partiellement échangées avec des cations métalliques, par exemple à l'aide de cations des métaux alcalino-terreux et/ou des cations de métaux de terres rares de numéro atomique 57 à 71 inclus. La première, appelée ici Y1, a un paramètre cristallin supérieur à 24.15Å et jusqu'à 24.38Å. La seconde, appelée ici Y2, a un paramètre cristallin supérieur à 24.38Å et inférieur ou égal à 24.51Å. Le rapport pondéral Y1/Y2 c'est à dire le rapport entre la première et la seconde zéolithe est compris entre 0.1 et 100, avantageusement entre 0.1 et 80 voire 0.1 et 50 et, de préférence entre 0.3 et 30 et de façon encore plus préférée entre 0.5 et 10. La teneur pondérale totale en matrice par rapport au support (le support étant constitué de la matrice et de la totalité des zéolithes Y) est comprise entre 20 et 99% et de préférence entre 25 et 98%, de façon encore plus préférée entre 40 et 97% et avantageusement entre 65 et 95%.

La zéolithe acide Y1 préférée est caractérisée par différentes spécifications : un paramètre cristallin compris entre 24.15Å et 24.38Å; un rapport molaire $SiO_2/Al_2O_3$ de charpente calculé d'après la corrélation dite de Fichtner-Schmittler (dans Cryst. Res. Tech. 1984, 19, K1) compris entre environ 500 et 21 ; une teneur en sodium inférieure à 0.15% poids déterminée sur la zéolithe calcinée à 1100°C ; une capacité $C_{Na}$ de reprise en ions sodium, exprimée en gramme de Na par 100 grammes de zéolithe modifiée, neutralisée puis calcinée, supérieure à environ 0,85; une surface spécifique déterminée par la méthode B.E.T. supérieure à environ 400 m²/g et de préférence supérieure à 550 m²/g; une capacité d'adsorption de vapeur d'eau à 25°C pour une pression partielle de 2,6 torrs (soit 34,6 MPa), supérieure à environ 6%, une répartition poreuse comprenant entre 1 et 20% et de préférence entre 3 et 15% du volume poreux contenu dans des pores de diamètre situé entre 20Å et 80Å, le reste du volume poreux étant contenu dans les pores de diamètre inférieur à 20Å.

L'autre zéolithe acide Y2 préférée est caractérisée par différentes spécifications : un paramètre cristallin supérieur à 24.38Å et jusqu'à 24.51Å ; un rapport molaire $SiO_2/Al_2O_3$ de charpente calculé d'après la corrélation dite de Fichtner-Schmittler (dans Cryst. Res. Tech. 1984, 19, K1) inférieur à environ 21 et supérieur ou égal à 10 ; une teneur en sodium inférieure à 0.15% poids déterminée sur la zéolithe calcinée à 1100°C ; une capacité $C_{Na}$ de reprise en ions sodium, exprimée en gramme de Na par 100 grammes de zéolithe modifiée, neutralisée puis calcinée, supérieure à environ 0,85; une surface spécifique déterminée par la méthode B.E.T. supérieure à environ 400 m$^2$/g et de préférence supérieure à 550 m$^2$/g; une capacité d'adsorption de vapeur d'eau à 25°C pour une pression partielle de 2,6 torrs (soit 34,6 MPa), supérieure à environ 6%, une répartition poreuse comprenant entre 1 et 20% et de préférence entre 3 et 15% du volume poreux contenu dans des pores de diamètre situé entre 20Å et 80Å, le reste du volume poreux étant contenu dans les pores de diamètre inférieur à 20Å.

Le catalyseur et le support renferment donc au moins ces deux zéolithes Y1 et Y2 mais il peut en contenir plus de deux pourvu que ces zéolithes présentent les paramètres cristallins de Y1 ou de Y2.

Toutes les méthodes de fabrication permettant d'obtenir les zéolithes Y1 et Y2 ayant les caractéristiques ci-dessus mentionnées sont convenables.

Le catalyseur de la présente invention renferme également au moins une matrice habituellement amorphe ou mal cristallisée choisie par exemple dans le groupe formé par l'alumine, la silice, la magnésie, l'oxyde de titane, la zircone, les phosphates d'aluminium, de titane ou de zirconium, l'argile, l'oxyde de bore et les combinaisons de deux au moins de ces composés.

La matrice est de préférence choisie dans le groupe formé par la silice, l'alumine, la magnésie, les combinaisons silice-alumine, les combinaisons silice-magnésie.

Le catalyseur de la présente invention peut être préparé par toutes les méthodes bien connues de l'homme du métier. Avantageusement, il est obtenu par mélange de la matrice et des zéolithes puis mise en forme. L'élément hydrogénant est introduit lors du mélange, ou encore après mise en forme (préféré). La mise en forme est suivie d'une calcination, l'élément hydrogénant est introduit avant ou après cette calcination. La préparation se termine dans tous les cas par une calcination à une température de 250 à 600°C. Une des méthodes préférées dans la présente invention consiste à malaxer les zéolithes Y de type structural faujasite dans un gel humide d'alumine pendant quelques dizaines de minutes, puis à passer la pâte ainsi obtenue à travers une filière pour former des extrudés de diamètre compris de préférence entre 0,4 et 4 mm.

Le catalyseur renferme en outre une fonction hydrogénante. La fonction hydro-deshydrogénante est assurée par au moins un métal ou composé de métal du groupe VIII tels que le nickel et le cobalt notamment. On peut utiliser une combinaison d'au moins un métal ou composé de métal du groupe VI (notamment le molybdène ou le tungstène) et d'au moins un métal ou composé de métal du groupe VIII de préférence non noble (notamment le cobalt ou le nickel) de la classification périodique des éléments. La fonction hydrogénante telle qu'elle a été définie précédemment peut être introduite dans le catalyseur à divers niveaux de la préparation et de diverses manières.

Elle peut être introduite en partie seulement (cas, par exemple, des associations d'oxydes de métaux des groupes VI et VIII) ou en totalité au moment du malaxage des deux types de zéolithe, avec le gel d'oxyde choisi comme matrice, le reste des élément(s) hydrogénant(s) étant alors introduit après malaxage, et plus généralement après calcination. De façon préférée, le métal du groupe VIII est introduit simultanément ou après le métal du groupe VI, quel que soit le mode d'introduction. Elle peut être introduite par une ou plusieurs opérations d'échange ionique sur le support calciné constitué des zéolithes dispersées dans la matrice choisie, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VI (notamment le molybdène ou le tungstène) ont été préalablement introduits au moment du malaxage du support. Elle peut enfin être introduite par une ou plusieurs opérations d'imprégnation du support calciné constitué des zéolithes et de la matrice, par des solutions contenant les précurseurs des oxydes de métaux des groupes VI et/ou VIII, les précurseurs des oxydes de métaux de groupe VIII étant de préférence introduits après ceux du groupe VI ou en même temps que ces derniers.

Dans le cas où les éléments sont introduits en plusieurs imprégnations des sels précurseurs correspondants, une étape de calcination intermédiaire du catalyseur devra être effectuée à une température comprise entre 250 et 600 °C.

La concentration totale en oxydes de métaux des groupes VIII et VI est comprise entre 1% et 40% en poids du catalyseur obtenu après calcination, et de préférence entre 3 et 30% et avantageusement entre 8-40%, voire 10 et 40% et mieux 10-30%. Le rapport pondéral exprimé en oxydes métalliques entre métal (ou métaux) du groupe VI sur métal (ou métaux) du groupe VIII est généralement compris entre 20 et 1,25 et de préférence entre 10 et 2. Le catalyseur peut également contenir du phosphore. La concentration en oxyde de phosphore ($P_2O_5$) est généralement

comprise entre 0.1 et 15% et de préférence entre 0.15 et10% poids.

L'imprégnation du molybdène peut alors être facilitée par ajout d'acide phosphorique dans les solutions de sels de molybdène.

Les catalyseurs ainsi obtenus, sous forme oxydes, peuvent éventuellement être amenés au moins en partie sous forme métallique ou sulfure.

Ils sont chargés en réacteur et utilisés pour l'hydrocraquage doux en particulier de coupes lourdes. Ils présentent une activité améliorée par rapport à l'art antérieur.

Les coupes pétrolières à traiter ont des points d'ébullition supérieurs à 100°C. Ce sont par exemple des kérosènes, des gazoles, des distillats sous vide, des résidus désasphaltés ou hydrotraités ou équivalents. Les charges fortement chargées en N et S ont été de préférence préalablement hydrotraitées. Les coupes lourdes sont de préférence constituées au moins de 80% en volume de composés dont les points d'ébullition sont d'au moins 350°C et de préférence entre 350 et 580 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0.01 et 5% poids. Les conditions de l'hydrocraquage telles que, température, pression, taux de recyclage d'hydrogène, vitesse volumique horaire, pourront être très variables en fonction de la nature de la charge, de la qualité des produits désirés, des installations dont dispose le raffineur.

Lorsqu'un hydrotraitement est nécessaire, le procédé de conversion de coupe pétrolière se déroule en deux étapes, les catalyseurs selon l'invention étant utilisés dans la deuxième étape.

Le catalyseur 1 de la première étape ayant une fonction d'hydrotraitement comprend une matrice de préférence à base d'alumine, et de préférence ne contenant pas de zéolithe, et au moins un métal ayant une fonction hydrodéshydrogénante. Ladite matrice peut également être constituée de, ou renfermer, de la silice, de la silice-alumine, de l'oxyde de bore, de la magnésie, de la zircone, de l'oxyde de titane ou une combinaison de ces oxydes. La fonction hydro-deshydrogénante est assurée par au moins un métal ou composé de métal du groupe VIII tels que le nickel et le cobalt notamment. On peut utiliser une combinaison d'au moins un métal ou composé de métal du groupe VI (notamment le molybdène ou le tungstène) et d'au moins un métal ou composé de métal du groupe VIII (notamment le cobalt ou le nickel) de la classification périodique des éléments. La concentration totale en oxydes de métaux des groupes VI et VIII est comprise entre 5 et 40 % en poids et de préférence entre 7 et 30 % en poids et le rapport pondéral exprimé en oxyde métallique en métal (ou métaux) du groupe VI sur métal (ou métaux) du groupe VIII est compris entre 1.25 et 20 et de préférence entre 2 et 10. De plus, ce catalyseur peut contenir du phosphore. La teneur en phosphore, exprimée en concentration en pentaoxyde de diphosphore $P_2O_5$ sera d'au plus 15% généralement, de préférence comprise entre 0.1 et 15 % en poids et de préférence comprise entre 0.15 et 10 % en poids.

La première étape se déroule généralement à une température de 350-460°C, de préférence 360-450°C, une pression totale de 2MPa à moins de 8MPa et de préférence 2-7MPa, une vitesse spatiale horaire de 0.1-5h$^{-1}$ et de préférence 0.2-2h$^{-1}$ et avec une quantité d'hydrogène d'au moins 100Nl/Nl de charge, et de préférence 260-2000Nl/Nl de charge.

Pour l'étape de conversion avec le catalyseur selon l'invention (ou seconde étape), les températures sont en général supérieures ou égales à 230°C et souvent comprises entre 350°C et 470°C et de préférence 350-460°C. La pression est supérieure ou égale à 2MPa et en général supérieure à 2.5MPa. La pression est inférieure à 8MPa et en général inférieure ou égale à 7MPa. La quantité d'hydrogène est au minimum de 100l/l de charge et souvent comprise entre 150 et 1500l/l d'hydrogène par litre de charge. La vitesse volumique horaire est comprise en général entre 0.15 et 10h$^{-1}$.

Les résultats qui importent au raffineur sont l'activité et la sélectivité en distillats moyens. Les objectifs fixés doivent être réalisés dans des conditions compatibles avec la réalité économique. Ce type de catalyseur permet d'atteindre dans des conditions de marche classique d'hydrocraquage doux des sélectivités en distillats moyens supérieures à 65% et généralement supérieures à 75% pour des niveaux de conversion supérieurs à 25% ou 30% et généralement inférieurs à 60%. Enfin, du fait de la composition du catalyseur, celui-ci est facilement régénérable.

Le demandeur a pu constater de façon surprenante que, selon l'invention, un catalyseur contenant au moins deux zéolithes Y désaluminées permettait d'obtenir une sélectivité en distillats moyens nettement améliorée par rapport aux catalyseurs connus dans l'art antérieur. Les exemples suivants illustrent la présente invention sans toutefois en limiter la portée.

**Exemple 1: fabrication d'un catalyseur C1 non conforme**

Le catalyseur C1 est fabriqué de la façon suivante : on utilise 20% poids d'une zéolithe Y de paramètre cristallin égal à 24.42Å que l'on mélange à 80% poids d'alumine de type SB3 fournie par la société Condéa. La pâte malaxée est ensuite extrudée à travers une filière de diamètre 1.4 mm. Les extrudés sont ensuite séchés une nuit à 120°C sous air puis calcinés à 550°C sous air. Les extrudés sont imprégnés à sec par une solution d'un mélange d'heptamolybdate d'ammonium, de nitrate de nickel et d'acide orthophosphorique, séchés une nuit à 120°C sous air et enfin calcinés sous air à 550°C.. Les teneurs pondérales en oxydes actifs sont les suivantes (par rapport au catalyseur) :

2,6 % en poids d'oxyde de nickel NiO

12.7 % en poids d'oxyde de molybdène $MoO_3$

5.5 % en poids d'oxyde de phosphore $P_2O_5$

**Exemple 2 : fabrication d'un catalyseur C2 non conforme**

Le catalyseur C2 est fabriqué de la façon suivante : on utilise 20% poids d'une zéolithe Y de paramètre cristallin égal à 24.28Å que l'on mélange à 80% poids d'alumine de type SB3 fournie par la société Condéa. La pâte malaxée est ensuite extrudée à travers une filière de diamètre 1.4 mm. Les extrudés sont ensuite séchés une nuit à 120°C sous air puis calcinés à 550°C sous air. Les extrudés sont imprégnés à sec par une solution d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes actifs sont les suivantes (par rapport au catalyseur) :

2,7 % en poids d'oxyde de nickel NiO

12.8 % en poids d'oxyde de molybdène $MoO_3$

5.4 % en poids d'oxyde de phosphore $P_2O_5$

**Exemple 3 : fabrication d'un catalyseur C3 conforme**

Le catalyseur C3 est fabriqué de la façon suivante : on utilise 10% poids d'une zéolithe Y de paramètre cristallin égal à 24.42Å et 10% poids d'une zéolithe Y de paramètre cristallin égal à 24.28Å que l'on mélange à 80% poids d'alumine de type SB3 fournie par la société Condéa. La pâte malaxée est ensuite extrudée à travers une filière de diamètre 1.4 mm. Les extrudés sont ensuite séchés une nuit à 120°C sous air puis calcinés à 550°C sous air. Les extrudés sont imprégnés à sec par une solution d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes actifs sont les suivantes (par rapport au catalyseur) :

2,6 % en poids d'oxyde de nickel NiO

12.7 % en poids d'oxyde de molybdène $MoO_3$

5.4 % en poids d'oxyde de phosphore $P_2O_5$

**Exemple 4: comparaison C1, C2 et C3**

Les catalyseurs dont les préparations sont décrites aux exemples précédents sont utilisés dans les conditions de l'hydrocraquage doux sur une charge pétrolière dont les principales caractéristiques sont les suivantes :

| | |
|---|---|
| point initial | 277 °C |
| point 10 % | 381 °C |
| point 50 % | 482 °C |
| point 90 % | 531 °C |
| point final | 545 °C |
| point d'écoulement | + 39 °C |
| densité (20/4) | 0.919 |
| Soufre (% poids) | 2.46 |
| Azote (ppm poids) | 930 |

L'unité de test catalytique comprend deux réacteurs en lit fixe, à circulation ascendante de la charge ("up-flow"). Dans chacun des réacteurs, on introduit 40ml de catalyseur. Dans le premier réacteur, celui dans lequel la charge passe en premier, on introduit le catalyseur 1 de première étape d'hydrotraitement HR360 vendu par la société Procatalyse comprenant un élément du groupe VI et un élément du groupe VIII déposés sur alumine. Dans le second réacteur, celui dans lequel la charge passe en dernier, on introduit le catalyseur 2 de deuxième étape c'est-à-dire le catalyseur d'hydroconversion. Les deux catalyseurs subissent une étape de sulfuration in-situ avant réaction. Notons que toute méthode de sulfuration in-situ ou ex-situ est convenable. Une fois la sulfuration réalisée, la charge décrite ci-dessus peut être transformée. La pression totale est de 5 MPa, le débit d'hydrogène est de 500 litres d'hydrogène gazeux par litre de charge injectée, la vitesse volumique horaire est de $0,5h^{-1}$.

Les performances catalytiques sont exprimées par la conversion brute à 400°C et par la sélectivité brute. Ces performances catalytiques sont mesurées sur le catalyseur après qu'une période de stabilisation, généralement au moins 48 heures, ait été respectée.

La conversion brute CB est prise égale à :

$$CB = \frac{\% \text{ poids 380+effluents}}{100}$$

La sélectivité brute SB est prise égale à :

$$SB = \left( \frac{\text{poids 150/380effluents}}{\text{poids 380-effluents}} \right) * 100$$

Dans le tableau suivant, nous avons reporté la conversion brute CB à 400°C et la sélectivité brute SB pour les trois catalyseurs.

|    | CB (%poids) | SB   |
|----|-------------|------|
| C1 | 55.5        | 77.3 |
| C2 | 45.3        | 82.5 |
| C3 | 49.6        | 82.4 |

L'utilisation d'un mélange de zéolithe permet d'atteindre un niveau de conversion élevé tout en ayant une sélectivité trés élevée, nettement plus élevée que celle du catalyseur C1 et du même niveau que celle du catalyseur C2 tout en ayant un niveau de conversion élevé puisque l'on constate un gain de conversion brute de 4.3% poids par rapport au catalyseur C2.

## Revendications

1. Procédé de conversion de coupe pétrolière dans lequel la coupe est mise au contact d'un catalyseur comprenant au moins une matrice, au moins une zéolithe Y de paramètre cristallin compris entre 24.15Å et 24.38Å (Y1) et au moins une zéolithe Y de paramètre cristallin supérieur à 24.38Å et inférieur ou égal à 24.51Å (Y2) et au moins un élément hydro-deshydrogénant, à une température d'au moins 230°C, une pression d'au moins 2MPa et inférieure à 8MPa, en présence d'une quantité d'hydrogène d'au moins 100Nl/l de charge, avec une vitesse volumique horaire de $0.15\text{-}10h^{-1}$.

2. Procédé selon l'une des revendications précédentes, dans lequel la coupe est constituée par au moins 80% en volume de composés à points d'ébullition d'au moins 350°C.

3. Procédé selon l'une des revendications précédentes, dans lequel la coupe pétrolière est choisie dans le groupe formé par les gazoles, les distillats sous vide, les résidus désasphaltés, les résidus hydrotraités.

4. Procédé selon l'une des revendications précédentes, dans lequel le catalyseur pour la conversion renferme une matrice choisie dans le groupe formé par l'alumine, la silice, la magnésie, l'oxyde de titane, l'oxyde de zirconium, les phosphates d'aluminium, les phosphates de titane, les phosphates de zirconium, l'oxyde de bore, l'argile et leurs mélanges.

5.  Procédé selon l'une des revendications précédentes, dans lequel le catalyseur renferme un élément hydro-deshydrogénant choisi dans le groupe formé par les éléments du groupe VIII et ceux du groupe VI de la classification périodique des éléments.

6.  Procédé selon l'une des revendications précédentes, dans lequel le catalyseur présente une teneur pondérale en matrice du support, égale à 20-99%.

7.  Procédé selon l'une des revendications précédentes, dans lequel le rapport pondéral Y1/Y2 est compris entre 0.1 et 100.

8.  Procédé selon l'une des revendications précédentes, dans lequel le rapport pondéral Y1/Y2 est compris entre 0.3 et 30.

9.  Procédé selon l'une des revendications précédentes, dans lequel le catalyseur contient 1-40% poids d'oxydes de la totalité des éléments hydrogénants.

10. Procédé selon l'une des revendications précédentes, dans lequel le catalyseur contient également 0.1 à 15% poids de pentaoxyde de diphosphore.

11. Procédé selon l'une des revendications précédentes, dans lequel le catalyseur est préparé par malaxage des zéolithes avec la matrice, introduction d'au moins une partie des éléments hydro-deshydrogénants, mise en forme et calcination.

12. Procédé selon l'une des revendications précédentes, dans lequel le catalyseur est préparé par malaxage des zéolithes et de la matrice, mise en forme, calcination puis introduction de (des) élément(s) hydro-deshydrogénant (s).

13. Procédé selon l'une des revendications précédentes, dans lequel le catalyseur est préparé par malaxage des zéolithes avec la matrice, mise en forme, introduction de (des) élément(s) hydro-deshydrogénant(s) et calcination.

14. Procédé selon l'une des revendications 11 à 13 dans lequel le(s) élément(s) hydro-deshydrogénant(s) appartenant au groupe VIII sont introduits après ou simultanément à l'introduction du (des) élément(s) hydro-déshydrogénant (s) appartenant au groupe VI.

15. Procédé selon l'une des revendications précédentes, dans lequel la coupe a été préalablement soumise à un hydrotraitement.

16. Procédé selon la revendication 15, dans lequel le catalyseur d'hydrotraitement comporte une matrice choisie dans le groupe formé par l'alumine, la silice, l'oxyde de bore, la magnésie, la zircone, l'oxyde de titane et les combinaisons de ces oxydes, et il comporte également au moins un métal ayant une fonction hydrodeshydrogénante, choisi dans le groupe des métaux des groupes VI et VIII, la concentration totale en oxydes dedits métaux étant comprise entre 5-40% poids, et le rapport pondéral d'oxydes de métaux du groupe VI sur oxydes de métaux du groupe VIII étant compris entre 1,25 et 20, et le catalyseur pouvant contenir au plus 15% poids de pentaoxyde de diphosphore.

17. Procédé selon les revendications 15 ou 16, dans lequel l'hydrotraitement se déroule à une température de 350-460°C, sous une pression d'au moins 2MPa et inférieure à 8MPa, une quantité d'hydrogène d'au moins 100Nl/l de charge avec une vitesse volumique horaire de $0.1-5h^{-1}$.

18. Procédé selon l'une des revendications précédentes mettant en oeuvre un catalyseur sulfuré.


**Claims**

1.  A process for the conversion of a petroleum cut in which the cut is brought into contact with a catalyst comprising at least one matrix, at least one Y zeolite with a lattice parameter which is in the range 24.15 Å to 24.38 Å (Y1), at least one Y zeolite with a lattice parameter of more than 24.38 Å and less than or equal to 24.51 Å (Y2), and at least one hydro-dehydrogenating element, at a temperature of at least 230°C, a pressure of at least 2 MPa and less than 8 MPa, in the presence of a quantity of hydrogen of at least 100 Nl/l of feed, with an hourly space velocity of 0.15 to 10 h$^{-1}$.

2. A process according to claim 1, in which the cut has first undergone hydrotreatment.

3. A process according to claim 2, in which the hydrotreatment catalyst comprises a matrix selected from the group formed by alumina, silica, boron oxide, magnesia, zirconia, titanium oxide and combinations of these oxides, and it also comprises at least one metal having a hydro-dehydrogenating function, selected from the group formed by group VI and group VIII metals, the total concentration of oxides of said metals being in the range 5% to 40% by weight, and the weight ratio of group VI metal oxides to group VIII metal oxides being in the range 1.25 to 20, and the catalyst possibly also containing at most 15% by weight of diphosphorous pentoxide.

4. A process according to claim 2 or claim 3, in which hydrotreatment takes place at a temperature of between 350-460°C, at a pressure of at least 2 MPa to less than 8 MPa, with a quantity of hydrogen of at least 100 Nl/l of feed and an hourly space velocity of 0.1-5 h$^{-1}$.

5. A process according to any one of the preceding claims, in which the cut is constituted by at least 80% by volume of compounds with boiling points of at least 350°C.

6. A process according to any one of the preceding claims, in which the petroleum cut is selected from the group formed by gas oils, vacuum distillates, deasphalted residues and hydrotreated residues.

7. A process according to any one of the preceding claims, in which the conversion catalyst comprises a matrix selected from the group formed by alumina, silica, magnesia, titanium oxide, zirconium oxide, aluminium phosphates, titanium phosphates, zirconium phosphates, boron oxide, clay and mixtures thereof.

8. A process according to any one of the preceding claims, in which the hydro-dehydrogenating element is selected from the group formed by elements from group VIII and elements from group VI of the periodic table.

9. A process according to any one of the preceding claims, in which the content of the matrix in the catalyst support is 20% to 98% by weight.

10. A process according to any one of the preceding claims, in which the Y1/Y2 weight ratio is in the range 0.1 to 100.

11. A process according to any one of the preceding claims, in which the Y1/Y2 weight ratio is in the range 0.3 to 30.

12. A process according to any one of the preceding claims, in which the catalyst contains 1% to 40% by weight of oxides in the totality of the hydrogenating elements.

13. A process according to any one of the preceding claims, in which the catalyst further contains 0.1% to 15% by weight of diphosphorous pentoxide.

14. A process according to any one of the preceding claims, in which the catalyst is prepared by mixing the zeolites with the matrix, introducing at least a portion of the hydro-dehydrogenating elements, forming then calcining.

15. A process according to any one of the preceding claims, in which the catalyst is prepared by mixing the zeolites and the matrix, forming, calcining then introducing the hydro-dehydrogenating element(s).

16. A process according to any one of the preceding claims, in which the catalyst is prepared by mixing the zeolites with the matrix, forming, introducing the hydro-dehydrogenating element(s), then calcining.

17. A process according to any one of claims 14 to 16, in which the hydro-dehydrogenating group VIII element(s) is/ are introduced after or simultaneously with the introduction of the hydro-dehydrogenating group VI element(s).

18. A process according to any one of the preceding claims with a sulphurized catalyst.

**Patentansprüche**

1. Verfahren zur Umwandlung eines Erdölschnittes, bei dem der Schnitt mit einem Katalysator in Kontakt gebracht wird, der wenigstens eine Matrix, wenigstens einen Y-Zeolith einem Kristallparameter zwischen 24,15 Å und 24,38 Å (Y1) und wenigstens einen Y-Zeolith mit einem Kristallparameter über 24,38 Å und kleiner oder gleich 24,51 Å (Y2) und wenigstens ein hydrierendes-dehydrierendes Element umfasst, bei einer Temperatur von wenigstens 230°C, einem Druck von wenigstens 2 MPa und kleiner als 8 MPa in Gegenwart einer Wasserstoffmenge von wenigstens 100NI/l Charge mit einer stündlichen Raumgeschwindigkeit von 0,15-10h$^{-1}$.

2. Verfahren nach einem der vorhergehenden Ansprüche, bei dem der Schnitt aus wenigstens 80 Vol.-% an Verbindungen mit einem Siedepunkt von wenigstens 350°C besteht.

3. Verfahren nach einem der vorhergehenden Ansprüche, bei dem der Erdölschnitt aus der Gruppe gewählt ist, die gebildet wird durch die Gasöle, die Vakuumdestillate, die deasphaltierten Rückstände, die hydrierbehandelten Rückstände.

4. Verfahren nach einem der vorhergehenden Ansprüche, bei dem der Katalysator für die Umwandlung eine Matrix einschließt, die aus der Gruppe gewählt ist, die gebildet wird durch Aluminiumoxid, Siliziumoxid, Magnesiumoxid, Titanoxid, Zirconiumoxid, Aluminiumphosphate, Titanphosphate, Zirconiumphosphate, Boroxid, Ton und deren Mischungen.

5. Verfahren nach einem der vorhergehenden Ansprüche, bei dem der Katalysator ein hydrierendes-dehydrierendes Element einschließt, das aus der Gruppe gewählt ist, die gebildet wird durch die Elemente der Gruppe VIII und jene der Gruppe VI des Periodensystems der Elemente.

6. Verfahren nach einem der vorhergehenden Ansprüche, bei dem der Katalysator einen Gewichtsgehalt an Trägermatrix gleich 20-99% aufweist.

7. Verfahren nach einem der vorhergehenden Ansprüche, bei dem das Gewichtsverhältnis Y1/Y2 zwischen 0,1 und 100 liegt.

8. Verfahren nach einem der vorhergehenden Ansprüche, bei dem das Gewichtsverhältnis Y1/Y2 zwischen 0,3 und 30 liegt.

9. Verfahren nach einem der vorhergehenden Ansprüche, bei dem der Katalysator 1-40 Gew.-% an Oxiden der Gesamtheit der hydrierenden Elemente enthält.

10. Verfahren nach einem der vorhergehenden Ansprüche, bei dem der Katalysator gleichermaßen 0,1 bis 15 Gew.-% Diphosphorpentoxid enthält.

11. Verfahren nach einem der vorhergehenden Ansprüche, bei dem der Katalysator durch Kneten der Zeolithe mit der Matrix, Einführung wenigstens eines Teils der hydrierenden-dehydrierenden Elemente, Formen und Kalzinieren hergestellt wird.

12. Verfahren nach einem der vorhergehenden Ansprüche, bei dem der Katalysator durch Kneten der Zeolithe und der Matrix, Formen, Kalzinieren und dann Einführen des hydrierenden Elements (der hydrierenden Elemente) hergestellt wird.

13. Verfahren nach einem der vorhergehenden Ansprüche, bei dem der Katalysator durch Kneten der Zeolithe mit der Matrix, Formen, Kalzinieren und dann Einführen des hydrierenden Elements (der hydrierenden Elemente) hergestellt wird.

14. Verfahren nach einem der Ansprüche 11 bis 13, bei dem das hydrierende Element (die hydrierenden Elemente), das (die) der Gruppe VIII angehört (angehören) nach oder gleichzeitig mit der Einführung des oder der hydrierenden-dehydrierenden Elemente der Gruppe VI eingeführt werden.

15. Verfahren nach einem der vorhergehenden Ansprüche, bei dem der Schnitt vorher einem Hydrotreatment unterzogen worden ist.

**16.** Verfahren nach Anspruch 15, bei dem der Hydrotreatment-Katalysator eine Matrix umfaßt, die aus der Gruppe gewählt ist, die gebildet wird durch Aluminiumoxid, Siliziumoxid, Boroxid, Magnesiumoxid, Zirconiumoxid, Titanoxid und den Kombinationen dieser Oxide, und er gleichermaßen wenigstens ein Metall mit einer hydrierenden-dehydrierenden Funktion aufweist, das aus der Gruppe der Metalle der Gruppen VI und VIII gewählt ist, wobei die Gesamtkonzentration an Oxiden dieser Metalle zwischen 5 - 40 Gew.-% liegt und das Gewichtsverhältnis von Metalloxiden der Gruppe VI zu Metalloxiden der Gruppe VIII zwischen 1,25 und 20 liegt und der Katalysator höchstens 15 Gew.-% Diphosphorpentoxid enthalten kann.

**17.** Verfahren nach einem der Ansprüche 15 oder 16, bei dem das Hydrotreatment bei Temperatur zwischen 350-460°C unter einem Druck von wenigstens 2 MPa und kleiner als 8 MPa, bei einer Wasserstoffmenge von wenigstens 100 Nl/l Charge mit einer stündlichen Volumengeschwindigkeit von 0,1 - 5 h$^{-1}$ stattfindet.

**18.** Verfahren nach einem der vorhergehenden Ansprüche, das einen geschwefelten Katalysator einsetzt.